# EUROPÄISCHE PATENTSCHRIFT

(11) **EP 0 626 595 B1**
(45) Veröffentlichungstag und Bekanntmachung des Hinweises auf die Patenterteilung: **10.06.1998**
(21) Anmeldenummer: 93118546.6
(22) Anmeldetag: 18.11.1993
(51) Int. Cl.: G01V 3/10, H03K 17/95

(54) **Fühler**
Sensor
Capteur

(30) Priorität: 25.05.1993 DE 4317359
(43) Veröffentlichungstag der Anmeldung: 30.11.1994
(73) Patentinhaber: Gebhard Balluff Fabrik feinmechanischer Erzeugnisse GmbH & Co., 73765 Neuhausen (DE)
(72) Erfinder: Fericean, Sorin, D-71229 Leonberg (DE); Friedrich, Michael, D-72649 Wolfschlugen (DE); Gass, Ernst, D-70619 Stuttgart (DE)
(74) Vertreter: Beck, Jürgen

(56) Entgegenhaltungen:
- EP-A- 0 171 013
- DE-A- 3 320 509
- DE-A- 3 606 586
- DE-C- 4 123 828
- FR-A- 2 281 578
- US-A- 4 068 189

## Beschreibung

Die Erfindung betrifft einen Sensor zur Erfassung eines elektrisch leitenden oder magnetisierbaren Objekts mit einem Oszillator, umfassend einen eine Induktivität und eine Kapazität aufweisenden Resonanzkreis, dessen Resonanzkreiswiderstand von einem Bedämpfungsabstand zwischen der Induktivität und dem Objekt abhängt und im Bereich kleiner Bedämpfungsabstände steil ansteigt, im Bereich mittlerer Bedämpfungsabstände weniger steil weiter ansteigt und im Bereich großer Bedämpfungsabstände im wesentlichen einen konstanten Wert aufweist, und eine einen Schleifenstrom für den Resonanzkreis liefernde geschlossene adaptive Schleifenstufe, welche einen vom Bedämpfungsabstand abhängigen Amplitudenwertverlauf erzeugt, und mit einer eine am Resonanzkreis anliegende Oszillatorspannung erfassende Auswerteschaltung.

Derartige Sensoren sind beispielsweise aus der europäischen Patentanmeldung 0 371 489 bekannt.

Bei diesen Sensoren hängt das Ansprechverhalten davon ab, wie sich die am Resonanzkreis anliegende Oszillatorspannung in Abhängigkeit von der Bedämpfung des Resonanzkreises, das heißt in Abhängigkeit vom Bedämpfungsabstand des Objekts von der Induktivität ändert. Der Verlauf der Oszillatorspannung über dem Bedämpfungsabstand wird als Oszillatorkennlinie bezeichnet, wobei für Sensoraufgaben lediglich der Teil der Kennlinie herangezogen werden kann, in welchem sich die Oszillatorspannung in Abhängigkeit vom Bedämpfungsabstand ändert.

In der europäischen Patentanmeldung 0 371 489 wird bereits eine Schaltung beschrieben, bei welcher der Teil der Kennlinie, in welchem sich die Oszillatorspannung mit dem Bedämpfungsabstand ändert, ausgedehnt wird, wobei bei dieser Schaltung eine Ausdehnung der Kennlinie zu großen Bedämpfungsabständen hin erfolgt und dabei ein für kleine Bedämpfungsabstände ungünstiges Verhalten der Kennlinie, insbesondere ein "Abreißen" des Oszillators bei kleinen Bedämpfungsabständen, in Kauf genommen wird.

In der DE-A-41 23 828, beispielsweise Fig. 2 derselben, ist eine übliche Kennlinie eines Oszillators offenbart, die aufgrund ihres Verlaufs klar erkennen läßt, daß der Oszillator bei kleinen Bedämpfungsabständen "abreißt".

Der Erfindung liegt ausgehend von der europäischen Patentanmeldung 0 371 489 die Aufgabe zugrunde, einen Sensor der gattungsgemäßen Art derart zu verbessern, daß der Oszillator auch im Bereich kleiner Bedämpfungsabstände schwingt und eine Kennlinie zeigt, bei welcher auch im Bereich kleiner Bedämpfungsabstände die Oszillatorspannung mit dem Bedämpfungsabstand variiert.

Diese Aufgabe wird bei einem Sensor der eingangs beschriebenen Art erfindungsgemäß dadurch gelöst, daß die adaptive Schleifenstufe so aufgebaut ist, daß sie einen mit dem Bedämpfungsabstand variierenden Amplitudenwertverlauf des Schleifenstroms erzeugt, welcher im Bereich kleiner Bedämpfungsabstände mindestens ein schwingungserhaltendes Segment aufweist, dessen Steigung kleiner ist als die Steigung des Amplitudenwertverlaufs im Bereich mittlerer Bedämpfungsabstände.

Die erfindungsgemäße Lösung schafft somit die Möglichkeit, durch Änderung des Amplitudenwertverlaufs des Schleifenstroms bei kleinen Bedämpfungsabständen den Oszillator auch noch bei kleinen Bedämpfungsabständen, zumindest in einem Teilbereich, am Schwingen zu halten und somit auch noch bei kleinen Bedämpfungsabständen in diesem Teilbereich eine mit dem Bedämpfungsabstand variierende Oszillatorspannung zu erhalten.

Damit kann der erfindungsgemäße Sensor vorzugsweise zusätzlich mit einer Anzeige für unterschiedliche Schaltzustände gemäß den Merkmalen gemäß der deutschen Patentanmeldung P 43 06 950.9 versehen werden.

Darüber hinaus bietet die erfindungsgemäße Lösung noch den zusätzlichen Vorteil, daß bei einem derartigen Sensor der Oszillator im Gegensatz zu einem aus dem Stand der Technik bekannten Oszillator eine geringere Anschwingzeit aufweist und somit auch die Schaltfrequenz des erfindungsgemäßen Sensors, insbesondere bei starker Bedämpfung, höher ist.

Ein besonders vorteilhaftes Ausführungsbeispiel sieht vor, daß die adaptive Schleifenstufe einen derartigen, sich mit dem Bedämpfungsabstand ändernden Schleifenstrom erzeugt, daß der Amplitudenwertverlauf des Schleifenstroms im Bereich kleiner Bedämpfungsabstände mehrere schwingungserhaltende Segmente aufweist, das heißt, daß der Amplitudenwertverlauf im Bereich kleiner Bedämpfungsabstände mehrere Segmente mit unterschiedlicher Steigung aufweist, wobei die Steigung jedes dieser Segmente kleiner ist als die Steigung des Amplitudenwertverlaufs im Bereich mittlerer Bedämpfungsabstände. Mit einem derartigen Amplitudenwertverlauf läßt sich der Oszillator bis zu sehr kleinen Bedämpfungsabständen am Schwingen halten.

Eine besonders vorteilhafte Lösung sieht dabei vor, daß die adaptive Schleifenstufe einen derartigen, sich mit dem Bedämpfungsabstand ändernden Schleifenstrom erzeugt, daß mit zunehmendem Bedämpfungsabstand schwingungserhaltende Segmente mit zunehmend größerer Steigung aufeinanderfolgen, das heißt wiederum umgekehrt, daß bei sehr kleinen Bedämpfungsabständen die schwingungserhaltenden Segmente die geringste Steigung aufweisen. Dies ist besonders dann wichtig, wenn der Oszillator bis zu sehr kleinen und kleinsten Bedämpfungsabständen schwingen und einen Verlauf des Oszillatorspannung zeigen soll, welcher von Null verschieden ist und sich mit dem Bedämpfungsabstand ändert.

Ein besonders vorteilhafter Verlauf der Oszillatorspannung über dem Bedämpfungsabstand ergibt sich dann, wenn die adaptive Schleifenstufe einen derartigen, sich mit dem Bedämpfungsabstand ändernden Schleifenstrom erzeugt, daß der Amplitudenwertverlauf des Schleifenstroms stetig ist, was sprunghafte Änderungen des Schleifenstroms ausschließt und somit auch andererseits sprunghafte Änderungen der Oszillatorspannung, so daß der gesamte mit dem Bedämpfungsabstand variable Teil des Verlaufs der Oszillatorspannung, beispielsweise beim Einsatz des erfindungsgemäßen Sensors als Näherungsschalter oder induktiver Weggeber, für ein sicheres Erkennen mehrerer Bedämpfungsabstände einsetzbar ist.

Für den Einsatz des erfindungsgemäßen Sensors als Näherungsschalter oder induktiven Weggeber ist es besonders vorteilhaft, wenn die adaptive Schleifenstufe einen derartigen, sich mit dem Bedämpfungsabstand ändernden Schleifenstrom erzeugt, daß die Steigung des Amplitudenwertverlaufs des Schleifenstroms im Bereich kleiner Bedämpfungsabstände stetig verläuft, so daß sich die Steigung zwar stetig aber nicht sprunghaft ändert. Dies führt ebenfalls zu einem möglichst gleichmäßigen Verlauf der Oszillatorspannung über dem Bedämpfungsabstand.

Noch vorteilhafter ist es dabei, wenn die adaptive Schleifenstufe einen derartigen, sich mit dem Bedämpfungsabstand ändernden Schleifenstrom erzeugt, daß die Steigung des Amplitudenverlaufs des Schleifenstroms stetig verläuft, das heißt, wenn sich die Steigung über den gesamten Amplitudenwertverlauf des Schleifenstroms nur stetig und nicht sprunghaft ändert, was wiederum einen kontinuierlichen Verlauf der Oszillatorspannung über dem Bedämpfungsabstand zur Folge hat.

Da für den Einsatzzweck des erfindungsgemäßen Sensors als Näherungsschalter oder induktiver Weggeber ein möglichst linearer Verlauf der Oszillatorspannung über dem Bedämpfungsabstand erwünscht ist, ist es besonders vorteilhaft, wenn die adaptive Schleifenstufe einen derartigen, sich mit dem Bedämpfungsabstand ändernden Schleifenstrom erzeugt, daß der Amplitudenwertverlauf des Schleifenstroms im Bereich mittlerer Bedämpfungsabstände im wesentlichen linear ansteigt. Daraus resultiert insbesondere ein im wesentlichen linearer Verlauf der Oszillatorspannung bei diesen Bedämpfungsabständen.

Hinsichtlich des Amplitudenwertverlaufs des Schleifenstroms innerhalb des Bereichs kleiner Bedämpfungsabstände ist es besonders vorteilhaft, wenn die adaptive Schleifenstufe einen derartigen, sich mit dem Bedämpfungsabstand ändernden Schleifenstrom erzeugt, daß der Amplitudenwertverlauf des Schleifenstroms im Bereich kleiner Bedämpfungsabstände beim Übergang von diesem zum Bereich mittlerer Bedämpfungsabstände die größte Steigung aufweist, wobei diese Steigung vorteilhafterweise ungefähr der Steigung des Amplitudenwertverlaufs im Bereich mittlerer Bedämpfungsabstände entspricht, so daß sich die Steigung des Amplitudenwertverlaufs innerhalb des Bereichs kleiner Bedämpfungsabstände ändert.

Darüber hinaus ist eine zweckmäßige Funktion des erfindungsgemäßen Sensors dann erhältlich, wenn die adaptive Schleifenstufe einen derartigen, sich mit dem Bedämpfungsabstand ändernden Schleifenstrom erzeugt, daß der Amplitudenwertverlauf des Schleifenstroms im Bereich kleiner Bedämpfungsabstände nahe des Bedämpfungsabstandes 0 das Segment mit der kleinsten Steigung aufweist, so daß in diesem Bereich durch den Amplitudenwertverlauf des Schleifenstroms eine möglichst starke Unterstützung der Schwingungen des Resonanzkreises erfolgt.

Hinsichtlich der Steigung der Segmente wurden bislang keine einzelnen Angaben gemacht. Generell ist unter einer Steigung des schwingungserhaltenden Segments des Amplitudenwertverlaufs, die kleiner als die Steigung des Amplitudenwertverlaufs im Bereich mittlerer Bedämpfungsabstände sein soll, jeglicher Steigungswert zu verstehen, der kleiner als der als Bezug dienende Wert ist, wobei die Steigung auch negativ sein kann.

Besonders zweckmäßig ist es, wenn die adaptive Schleifenstufe einen derartigen, sich mit dem Bedämpfungsabstand ändernden Schleifenstrom erzeugt, daß ein schwingungserhaltendes Segment eine Steigung von ≤ 0 aufweist.

Im Zusammenhang mit der bisherigen Erläuterung einzelner Ausführungsbeispiele der erfindungsgemäßen Lösung wurden keine weiteren Angaben zu den Absolutwerten des Amplitudenwertverlaufs des Schleifenstroms gemacht. Durch die Reduzierung der Steigung des Schleifenstroms gegenüber der Steigung bei mittleren Bedämpfungsabständen wird bereits erreicht, daß der Amplitudenwertverlauf bei abnehmendem Bedämpfungsabstand nicht linear wie im Bereich mittlerer Bedämpfungsabstände abnimmt, sondern in einem geringeren Maß, woraus bereits eine Ausdehnung der Oszillatorfunktion in den Bereich kleiner Bedämpfungsabstände erfolgt. Dabei ist jedoch nicht zwangsläufig sichergestellt, daß über die dem gesamten schwingungserhaltenden Segment entsprechenden kleinen Bedämpfungsabstände der Amplitudenwertverlauf der Oszillatorspannung Werte größer Null aufweist.

Dies ist lediglich dann erfüllt, wenn die adaptive Schleifenstufe einen derartigen, sich mit dem Bedämpfungsabstand ändernden Schleifenstrom erzeugt, daß der Amplitudenwertverlauf des Schleifenstroms im Bereich des schwingungserhaltenden Segments Werte aufweist, welche ein Abreißen des Oszillators verhindern.

Besonders vorteilhaft ist ein Ausführungsbeispiel, bei welchem die adaptive Schleifenstufe einen derartigen, sich mit dem Bedämpfungsabstand ändernden Schleifenstrom erzeugt, daß der Amplitudenwertverlauf des Schleifenstroms im Bereich kleiner Bedämpfungsabstände Werte aufweist, welche ein Abreißen des Oszillators bis zu Bedämpfungsabständen von nahe 0 verhindern.

Insbesondere für den Einsatz des erfindungsgemäßen Sensors als Näherungsschalter oder induktiven Weggeber hat es sich als besonders vorteilhaft erwiesen, wenn die adaptive Schleifenstufe einen derartigen, sich mit dem Bedämpfungsabstand ändernden Schleifenstrom erzeugt, daß der Amplitudenwertverlauf des Schleifenstroms zu einem im wesentlichen stetig steigenden Amplitudenwertverlauf der Oszillatorspannung im Bereich kleiner und mittlerer Bedämpfungsabstände führt. Noch besser ist es sogar, wenn die adaptive Schleifenstufe einen derartigen, sich mit dem Bedämpfungsabstand ändernden Schleifenstrom erzeugt, daß der Amplitudenwertverlauf des Schleifenstroms zu einem im wesentlichen linear ansteigenden Amplitudenwertverlauf der Oszillatorspannung im Bereich kleiner und mittlerer Bedämpfungsabstände führt.

Im Zusammenhang mit der Erläuterung zu den bisherigen Ausführungsbeispielen wurde nicht im Näheren darauf eingegangen, wie der Bereich kleiner Bedämpfungsabstände zu definieren ist. Eine vorteilhafte Lösung sieht dabei vor, daß der Resonanzkreiswiderstand sich entsprechend der Formel R=Rᵣₑₛ₀(1 - e ^{-B}/K) verhält, wobei RresO der Resonanzkreiswiderstand ohne Bedämpfung, B der Abstand zwischen Objekt und Induktivität und K eine Funktionskonstante sind, und wenn der Bereich kleiner Bedämpfungsabstände bei Werten von B kleiner ungefähr 2K liegt und daß die adaptive Schleifenstufe in diesem Bereich den, sich mit dem Bedämpfungsabstand ändernden Schleifenstrom mit dem schwingungserhaltenden Segment erzeugt.

Basierend auf einem derartigen Verhalten des Resonanzkreiswiderstandes läßt sich vorteilhafterweise auch der Bereich mittlerer Bedämpfungsabstände definieren, welcher dadurch definiert ist, daß Resonanzkreiswiderstand sich entsprechend der Formel R=Rᵣₑₛ₀(1 - e ^{-B}/K) verhält, wobei Rᵣₑₛ₀ der Resonanzkreiswiderstand ohne Bedämpfung, B der Abstand zwischen Objekt und Induktivität und K eine Funktionskonstante sind, daß der Bereich mittlerer Bedämpfungsabstände bei Werten von B zwischen ungefähr 2K und ungefähr 4K liegt.

Bei einem weiteren Ausführungsbeispiel des erfindungsgemäßen Sensors ist vorgesehen, daß der Resonanzkreiswiderstand sich entsprechend der Formel R=Rᵣₑₛ₀(1 - e ^{-B}/K) verhält, wobei Rᵣₑₛ₀ der Resonanzkreiswiderstand ohne Bedämpfung, B der Abstand zwischen Objekt und Induktivität und K eine Funktionskonstante sind, und daß die adaptive Schleifenstufe einen derartigen, sich mit dem Bedämpfungsabstand ändernden Schleifenstrom erzeugt, daß das schwingungserhaltende Segment bei Werten von B≤ ungefähr 1,5K liegt.

Ein noch besseres Schwingungsverhalten des Oszillators beim erfindungsgemäßen Sensors ist dann erhältlich, wenn das schwingungserhaltende Segment bei Werten von B≤ ungefähr 1K liegt, besonders vorteilhaft ist es, wenn das schwingungserhaltende Segment bei Werten von B≤ ungefähr 0,5K liegt.

Im Zusammenhang mit der Beschreibung bisheriger Ausführungsbeispiele wurden keine näheren Angaben gemacht, wie die adaptive Schleifenstufe im einzelnen aufgebaut sein soll. Beispielsweise wäre es bei einem Ausführungsbeispiel der erfindungsgemäßen Lösung denkbar, den Resonanzkreiswiderstand beim jeweiligen Bedämpfungsabstand zu messen und in Abhängigkeit von dem jeweiligen Resonanzkreiswiderstand aus einem Kennlinienfeld den entsprechenden Amplitudenwert des Schleifenstroms auszulesen und einzustellen. Mit dieser Lösung könnte ein beliebiger Amplitudenwertverlauf des Schleifenstroms eingestellt werden.

Eine vereinfachte und vor allem kostengünstig herzustellende Lösung sieht jedoch vor, daß die Schleifenstufe eine einen Rückkopplungsstrom liefernde Rückkopplungsstufe und eine einen Zusatzstrom liefernde Zusatzstromstufe umfaßt.

Dabei ist es insbesondere denkbar, die Rückkopplungsstufe der Schleifenstufe entsprechend einer bekannten Oszillatorschaltung auszubilden und den gewünschten Amplitudenwertverlauf des Schleifenstroms durch entsprechende Ausbildung der Zusatzstromstufe zu erhalten.

So sieht eine vorteilhafte Ausführungsform der erfindungsgemäßen Lösung vor, daß die Zusatzstromstufe bei dem schwingungserhaltenden Segment entsprechenden Resonanzkreiswiderstandswerten oder Bedämpfungsabständen einen höheren Zusatzstrom zum Rückkopplungsstrom liefert, als außerhalb des Bereichs kleiner Bedämpfungsabstände.

Insbesondere sieht ein vorteilhaftes Ausführungsbeispiel vor, daß der Resonanzkreiswiderstand sich entsprechend der Formel R=Rᵣₑₛ₀ (1 - e ^{-B}/K) verhält, wobei Rᵣₑₛ₀ der Resonanzkreiswiderstand im unbedämpften Zustand, B der Abstand zwischen Objekt und Induktivität und K eine Funktionskonstante sind, und daß die Zusatzstromstufe bei Werten des Resonanzkreiswiderstandes, welche einem Abstand B von weniger als 1,5K entsprechen, einen höheren Zusatzstrom in den Resonanzkreis einspeist als bei einem Abstand B > 2K.

Noch vorteilhafter ist es, wenn dies bei Werten des Resonanzkreiswiderstandes, welche einem Abstand B von weniger als 1K entsprechen, erfolgt und noch besser ist es, wenn der höhere Zusatzstrom bei einem Abstand B von weniger als 0,5K bereits eingespeist wird.

Ein besonders vorteilhaftes Ausführungsbeispiel sieht vor, daß die Zusatzstromstufe bei Werten des Resonanzkreiswiderstandes, die einem Abstand B von weniger als 3K entsprechen, einen den Schleifenstrom gegenüber dem Rückkopplungsstrom nennenswert zu höheren Werten verändernden Zusatzstrom einspeist.

Im Rahmen der bislang beschriebenen Ausführungsbeispiele, gemäß welchen die Schleifenstromstufe eine Rückkopplungsstufe und eine Zusatzstromstufe umfaßt, wurde nicht näher darauf eingegangen, daß in dem Fall, in dem der Schleifenstrom nur gleich dem Rückkopplungsstrom ist, der Oszillator bei einem kritischen Bedämpfungsabstand nicht mehr schwingt und somit abreißt.

In diesem Fall ist es besonders vorteilhaft, wenn die Zusatzstromstufe bei Bedämpfungsabständen im wesentlichen im Bereich des kritischen Bedämpfungsabstandes einen höheren Zusatzstrom liefert als oberhalb desselben, so daß dieser Zusatzstrom dazu führt, daß der kritische Bedämpfungsabstand zu kleineren Bedämpfungsabstandswerten verschoben werden kann.

Besonders vorteilhaft ist es, wenn die Zusatzstromstufe bei Bedämpfungsabständen unterhalb des kritischen Bedämpfungsabstandes einen höheren Zusatzstrom liefert als oberhalb desselben.

Vorzugsweise ist dabei in den beiden vorstehend genannten Fällen vorgesehen, daß der Zusatzstrom Werte aufweist, welche dazu führen, daß dieser in Verbindung mit dem Rückkopplungsstrom ein Abreißen des Oszillators verhindert.

Ein besonders vorteilhaftes Ausführungsbeispiel sieht vor, daß der Zusatzstrom eine mit zunehmendem Bedämpfungsabstand abfallenden Verlauf aufweist.

Besonders vorteilhaft hat sich ein Ausführungsbeispiel erwiesen, bei welchem der Zusatzstrom einen ähnlich dem reziproken Wert des Bedämpfungsabstandes abfallenden Verlauf aufweist.

Hinsichtlich der den Zusatzstrom liefernden Zusatzstromstufe wurden im vorstehenden ebenfalls keine weiteren Angaben gemacht. So sieht ein besonders vorteilhaftes Ausführungsbeispiel vor, daß die Zusatzstromstufe eine Konstantstromquelle und eine spannungsadaptive Stromsteuerung aufweist.

Diese spannungsadaptive Stromsteuerung kann in unterschiedlichster Art und Weise ausgebildet sein. Sie muß lediglich so ausgebildet sein, daß im Bereich kleiner Bedämpfungsabstände mit fallender Oszillatorspannung der Zusatzstrom zunimmt.

So sieht ein vorteilhaftes Ausführungsbeispiel vor, daß die spannungsadaptive Stromsteuerung einen Differenzverstärker aufweist.

Vorzugsweise ist dabei die spannungsadaptive Stromsteuerung so betrieben, daß sie eine einer Steuerspannung für die Rückkopplungsstufe entsprechende Steuerspannung erfaßt.

Hinsichtlich der Ausbildung der Rückkopplungsstufe wurden bislang auch keine weiteren Angaben gemacht. So sieht ein vorteilhaftes Ausführungsbeispiel vor, daß die Rückkopplungsstufe eine Mitkopplungsstufe und einen Verstärker zur Ansteuerung derselben umfaßt.

Vorzugsweise ist dabei die Mitkopplungsstufe als Stromspiegel aufgebaut, welcher durch den Verstärker angesteuert wird, und insbesondere ist der Verstärker so aufgebaut, daß er einen einzigen, als Verstärker geschalteten Transistor umfaßt.

Die Erfindung wird anhand der nachfolgenden Beschreibung sowie der zeichnerischen Darstellung einiger Ausführungsbeispiele näher erläutert.

In der Zeichnung zeigen:
- Fig. 1: ein Blockschaltbild eines ersten Ausführungsbeispiels eines erfindungsgemäßen Sensors;
- Fig. 2: eine Darstellung des Verlaufs eines Resonanzkreiswiderstandes RLC eines erfindungsgemäßen Sensors, eine Kennlinie ULC eines erfindungsgemäßen Sensors und eine Kennlinie ULC (R) eines aus dem Stand der Technik bekannten Sensors;
- Fig. 3: einen Verlauf eines Amplitudenwertverlaufs eines Schleifenstroms IS eines erfindungsgemäßen Sensors und die zwei den Schleifenstrom IS bei dem Ausführungsbeispiel gemäß Fig. 1 ergebenden Teilströme, den Rückkopplungsstrom IR und den Zusatzstrom IZ;
- Fig. 4: ein erstes Realisierungsbeispiel einer Zusatzstromstufe;
- Fig. 5: ein zweites Realisierungsbeispiel einer Zusatzstromstufe;
- Fig. 6: ein zweites Ausführungsbeispiel eines erfindungsgemäßen Sensors mit einer dritten Realisierungsform einer erfindungsgemäßen Zusatzstromstufe;
- Fig. 7: eine schematische Erläuterung der Funktion der Zusatzstromstufe gemäß Fig. 6 im entdämpften Zustand (punktierte Kurven) und im bedämpften Zustand (strichpunktierte Kurven), wobei
Fig. 7a den Verlauf der Oszillatorspannung ULC über der Zeit,
Fig. 7b den Verlauf der Spannungen U1 und U2 in Fig. 6 über der Zeit,
Fig. 7c den Verlauf der Spannung UE in Fig. 6 über der Zeit,
Fig. 7d den Verlauf des Stroms I8 über der Zeit,
Fig. 7e den Verlauf des Stroms I9 über der Zeit zeigen;
- Fig. 8: eine Darstellung eines Amplitudenwertverlaufs des Schleifenstroms IS über dem Bedämpfungsabstand für das Ausführungsbeispiel gemäß Fig. 6 und eine Darstellung des für das Ausführungsbeispiel gemäß Fig. 6 berechneten Amplitudenwertverlaufs des Schleifenstroms IS(C);
- Fig. 9: eine Darstellung des Amplitudenwertverlaufs der Oszillatorspannung ULC über dem Bedämpfungsabstand und eine Darstellung des Amplitudenwertverlaufs einer Oszillatorspannung ULC (R), erhältlich ohne eine erfindungsgemäße Zusatzstromstufe, und
- Fig. 10: eine Darstellung des Verlaufs des Resonanzkreiswiderstandes RLC des Ausführungsbeispiels gemäß Fig. 6 über dem Bedämpfungsabstand und eine Darstellung eines berechneten Amplitudenwertverlaufs ULC (C) für das Ausführungsbeispiel gemäß Fig. 6.

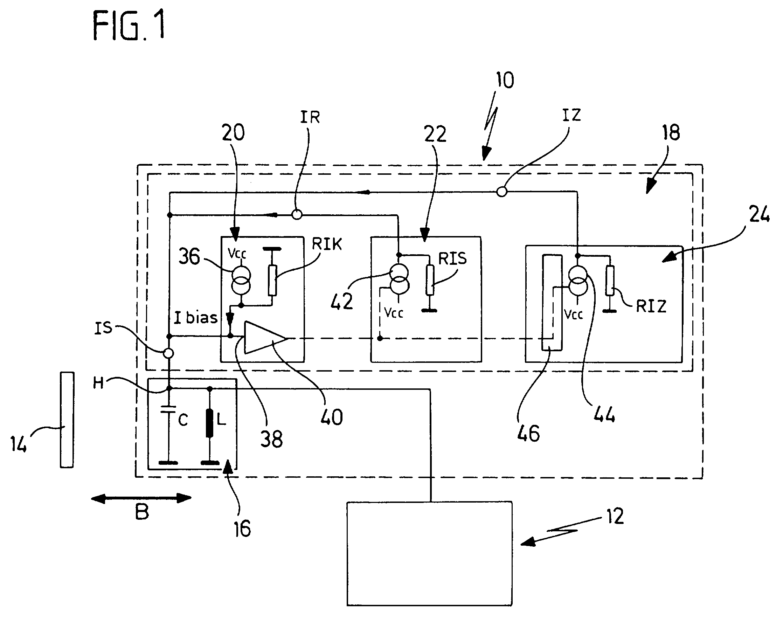

Ein in Fig. 1 dargestelltes Ausführungsbeispiel eines erfindungsgemäßen Sensors umfaßt einen als ganzes mit 10 bezeichneten Oszillator und eine als ganzes mit 12 bezeichnete Auswerteschaltung, welche einen Schwingungszustand des Oszillators 10 erfaßt.

Dieser Schwingungszustand des Oszillators 10 ist durch ein zu detektierendes Objekt 14 beeinflußbar und zwar entsprechend einem Bedämpfungsabstand B des Gegenstands 14 von einer Induktivität L eines Resonanzkreises 16 des Oszillators 10.

Der Resonanzkreis 16 umfaßt seinerseits eine Kapazität C und die Induktivität L, die parallel geschaltet sind und einerseits auf Masse liegen, während andererseits an einem Anschluß H in diese ein einen resonanten Schwingungszustand erhaltender Schleifenstrom IS eingespeist wird, den eine adaptive Schleifenstufe 18 erzeugt. Ein Wechselstromwiderstand dieses bei einer Resonanzfrequenz schwingenden Resonanzkreises variiert aufgrund einer Bedampfung der Induktivität L durch das Objekt 14, wobei dieses entweder aus elektrisch leitendem oder magnetisierbarem Material ist.

Die adaptive Schleifenstufe 18 umfaßt eine Ansteuerstufe 20, welche vorzugsweise als Verstärkerstufe ausgebildet ist und eine von der Ansteuerstufe 20 angesteuerte Mitkopplungsstufe 22, welche einen Rückkopplungsstrom IR erzeugt.

Darüber hinaus umfaßt die adaptive Schleifenstufe 18 eine Zusatzstromstufe 24, welche einen mitgekoppelten Zusatzstrom IZ erzeugt, wobei der Zusatzstrom IZ und der Rückkopplungsstrom IR sich zu dem Schleifenstrom IS addieren.

Im einzelnen umfaßt die Ansteuerstufe 20 einen eine am Anschluß H anliegende Spannung ULC an einem Eingang 38 erfassenden Verstärker 40, der seinerseits mit einem Ausgang eine Stromquelle 42 der Mitkopplungsstufe 22 ansteuert, wobei die Stromquelle 42 den Rückkopplungsstrom IR liefert.

Im Fall einer für den Verstärker 40 erforderlichen Vorspannung umfaßt die Ansteuerstufe 20 eine Konstantstromquelle 36, welche einen konstanten Gleichstrom Ibias in den Resonanzkreis 16 an dem für den Schleifenstrom IS vorgesehenen Anschluß H des Resonanzkreises zusätzlich zu dem Schleifenstrom IS in den Resonanzkreis 16 einspeist.

Die Zusatzstromstufe 24 umfaßt ihrerseits ebenfalls eine Zusatzstromquelle 44, welche angesteuert unter Berücksichtigung der Spannung ULC den Zusatzstrom IZ liefert, wobei der von der Zusatzstromquelle 44 gelieferte Zusatzstrom IZ von einer Steuerstufe 46 gesteuert ist, an welcher eine der Spannung ULC entsprechende Eingangsspannung anliegt.

Zusätzlich ist in der adaptiven Schleifenstufe 18 noch zu berücksichtigen, daß die gegebenenfalls vorhandene Konstantstromquelle 36 einen Innenwiderstand RIK, die Stromquelle 42 einen Innenwiderstand RIS und die Zusatzstromquelle 44 einen Innenwiderstand RIZ aufweisen, die sich auf das Verhalten des Oszillators 10 auswirken.

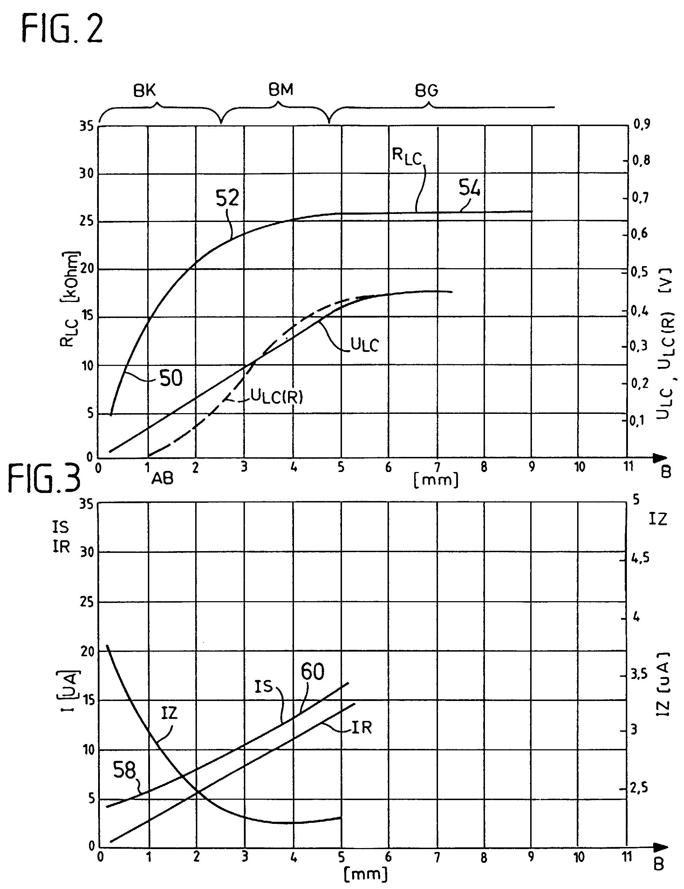

Der Gesamtwiderstand RLC des Resonanzkreises 16 bei Resonanzfrequenz unter Berücksichtigung der Innenwiderstände RIK, RIS und RIZ ist in Fig. 2 über dem Bedämpfungsabstand B des Gegenstandes 14 von dem Resonanzkreis 16 dargestellt. Dieser Gesamtwiderstand RLC steigt in einem Abschnitt 50 steil an, vorzugsweise mit zunehmend geringer werdender Steigung. Dieser Abschnitt 50 entspricht einem Bereich BK kleiner Bedämpfungsabstände B.

Im Anschluß daran steigt der Gesamtwiderstand in einem Abschnitt 52 weiter an. Dieser entspricht einem Bereich BM mittlerer Bedämpfungsabstände B.

In einem Bereich BG großer Bedämpfungsabstände B verläuft der Gesamtwiderstand in einem Abschnitt 54 mit einem im wesentlichen konstanten Wert.

Insbesondere verhält sich der Resonanzkreiswiderstand RLC entsprechend der Formel R = Rᵣₑₛ₀ (1 - e ^{B}/K) wobei Rᵣₑₛ₀ der Resonanzkreiswiderstand ohne Bedampfung, B der Bedämpfungsabstand und K eine Funktionskonstante ist. Der Bereich BK kleiner Bedämpfungsabstände B liegt zwischen B>0 und B<2K, der Bereich BM mittlerer Bedämpfungsabstände B zwischen B>2K und B<4K und der Bereich BG großer Bedämpfungsabstände bei B>4K. Bei einem derartigen Verlauf des Widerstands RLC des Resonanzkreises 16 ist die Kennlinie des Oszillators 10, das heißt der Amplitudenwertverlauf der Spannung ULC über dem Bedämpfungsabstand B, vorzugsweise dann über den Bedämpfungsabstand B linear zunehmend, wenn der Amplitudenwertverlauf des Schleifenstroms IS, wie in Fig. 3 dargestellt, aus zwei Anteilen besteht, nämlich dem Rückkopplungsstrom IR, welcher aufgrund der Arbeitsweise des Verstärkers 40 und der Stromquelle 42 vorzugsweise ungefähr linear über dem Bedämpfungsabstand verläuft, und dem Zusatzstrom IZ, welcher, wie in Fig. 3 dargestellt, nennenswerte zusätzliche Beiträge zum Strom IR im Bereich BK kleiner Bedämpfungsabstände liefert, welcher ungefähr dem steil abfallenden Bereich 50 des Widerstands RLC entspricht. In diesem Bereich liefert der Strom IZ zusätzliche Anteile zum Strom IR, welche sich mit zunehmendem Bedämpfungsabstand B ungefähr ähnlich einem 1/B-Verlauf verhalten.

Der Einfluß des Zusatzstroms IZ, geliefert von der Zusatzstromstufe 24 läßt sich anhand von Fig. 2 deutlich machen, wenn man dort die Spannung ULC (R) aufzeichnet, welche bei Zusatzstrom IZ=0 erhältlich ist, das heißt in einem Fall, in welchem der Amplitudenwertverlauf des Schleifenstroms IS lediglich dem Rückkopplungsstrom IR entspricht. In diesem Fall schwingt der Oszillator 10 unterhalb eines Bedämpfungsabstandes AB nicht mehr. Dieser Punkt des Abreißens wird dabei als Abreißpunkt AB bezeichnet, so dap ULC bei diesem Abreißpunkt bereits 0 wird, bevor der Bedämpfungsabstand B selbst 0 wird.

Darüber hinaus ist der Verlauf von ULC (R) erheblich steiler als der von ULC und näherungsweise S-förmig, so daß ein ohne Zusatzstrom IZ arbeitender Oszillator nicht die erfindungsgemäßen Vorteile zeigt.

Ferner ist in Fig. 2 und 3 erkennbar, daß der mitgekoppelte Zusatzstrom IZ den Oszillator 10 bis nahe an den Bedämpfungsabstand B=0 am Schwingen hält, und somit andererseits auch ein rasches Anschwingen des Oszillators 10 zur Folge hat.

Bei der Darstellung in Fig. 3 ist dabei zu berücksichtigen, daß für IZ eine gespreizte Abszissenskala (rechte Seite) verwendet wurde. Die Addition der Ströme IR und IZ ergibt somit den Schleifenstrom IS, welcher zumindest im Bereich kleiner und mittlerer Bedämpfungsabstände mit einem im wesentlichen linear ansteigenden Verlauf der Spannung ULC über zunehmendem Bedämpfungsabstand korrespondiert.

Der Amplitudenwertverlauf des Schleifenstroms IS verläuft seinerseits im Bereich BM mittlerer Bedämpfungsabstände im wesentlichen linear, im Bereich BK kleiner Bedämpfungsabstände ist die Steigung des Amplitudenwertverlaufs des Schleifenstroms IS in einem Segment 58 kleiner als in einem Abschnitt 60 welcher dem Bereich BM mittlerer Bedämpfungsabstände entspricht.

Vorzugsweise nimmt die Steigung im Bereich BK kleiner Bedämpfungsabstände mit abnehmendem Bedämpfungsabstand immer mehr ab und ist nahe dem Bedämpfungsabstand B=O am kleinsten. Ein derartiger Verlauf des Stromes IZ über dem Bedämpfungsabstand wird dabei durch die Steuerstufe 46 generiert. Diese könnte beispielsweise einen Mikroprozessor beinhalten, welcher aus einem abgespeicherten Kennfeld entsprechend den Werten von RLC Steuerwerte für die Zusatzstromquelle 44 ermittelt und die Zusatzstromquelle 44 entsprechend ansteuert.

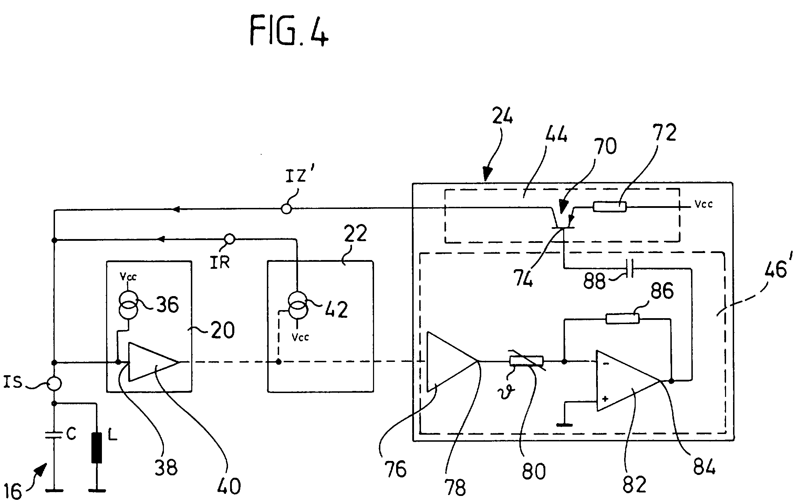

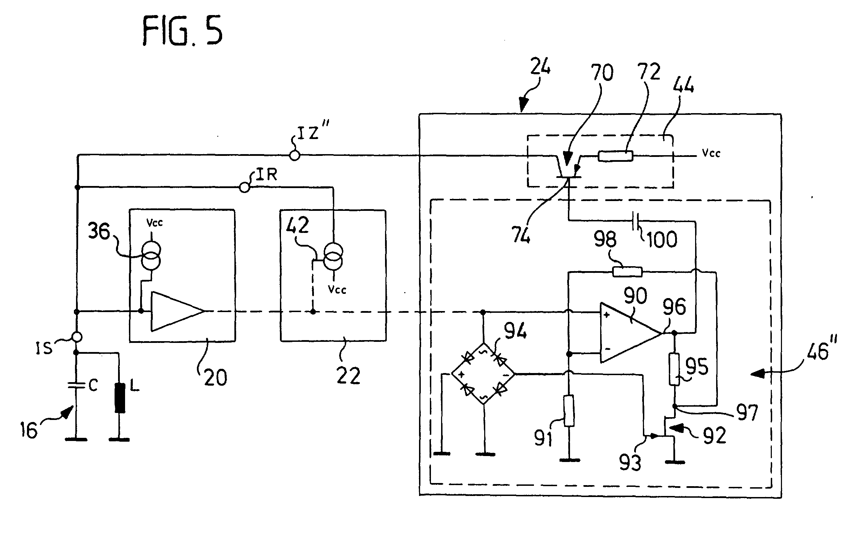

Realisierungsbeispiele für die Zusatzstromstufe 24 sind beispielsweise die in Fig. 4 und Fig. 5 dargestellten Schaltungen.

Bei der in Fig. 4 dargestellten Zusatzstromstufe 24 ist die Zusatzstromquelle 44 durch einen Transistor 70 mit einem vorgeschalteten Widerstand 72 gebildet, dessen Basis 74 über die Steuerstufe 46' angesteuert wird, wobei die Steuerstufe 46' einen eingangsseitigen Verstärker 76 aufweist, dessen Ausgang 78 über einen Kaltleiter 80 mit einem Minuseingang eines Operationsverstärkers 82 verbunden ist, während ein Pluseingang dieses Operationsverstärkers 82 auf Masse liegt. Ein Ausgang 84 des Operationsverstärkers ist über einen Widerstand 86 auf den Minuseingang rückgekoppelt und ferner über einen Kondensator 88 mit der Basis 74 des Transistors 70 verbunden und steuert diesen an.

Die Widerstandscharakteristik des Kaltleiters 80 führt nun dazu, daß lediglich bei kleinen Spannungen ULC über den Operationsverstärker 82 eine nennenswerte Ansteuerung des Transistors 70 erfolgt. Bei zunehmenden Spannungen ULC erfolgt eine geringere Ansteuerung, so daß der mitgekoppelte Strom IZ' näherungsweise einen 1/B-Verlauf zeigt.

Einen ähnlichen Verlauf eines mitgekoppelten Stroms IZ" erhält man auch bei der Steuerstufe 46" (Fig.5), welche ebenfalls einen Operationsverstärker 90 umfapt, dessen Pluseingang direkt mit einem Eingang der Steuerschaltung 46" verbunden ist, während dessen Minuseingang über einen Widerstand 91 auf Masse gelegt ist und ein Gate 93 des Feldeffekttransistors 92 über einen Anschluß eines Gleichrichters 94 angesteuert ist. Der Feldeffekttransistor 92 liegt zwischen einem Ausgang 96 und Masse mit einem vorgeschalteten Widerstand 95. Der Operationsverstärker 90 ist ferner über einen Widerstand 98 auf seinen Minuseingang rückgekoppelt, wobei der Widerstand 98 zwischen einem Drainanschluß 97 des Feldeffekttransistors 92 und dem Widerstand 95 angeschlossen ist. Der Operationsverstärker 90 steuert zusätzlich mit seinem Ausgang 96 über einen Kondensator 100, in gleicher Weise wie bei dem Ausführungsbeispiel gemäß Fig. 4, die Basis 74 des Transistors 70 an.

Bei kleinen Bedämpfungsabständen B ist die am Gate 93 anliegende zu ULC proportionale Steuerspannung klein und ein Strom durch den Feldeffekttransistor 92 ist hoch. Dies führt zu einer hohen Verstärkung des Verstärkers 90 und damit zu einem hohen Steuersignal für den Transistor 70.

Bei großen Bedämpfungsabständen B wird der Strom durch den Feldeffekttransistor 92 aufgrund der großen Steuerspannung am Gate 93 kleiner und somit die Verstärkung des Verstärkers 90 ebenfalls kleiner.

Im übrigen ist die Zusatzstromquelle 44 gleich aufgebaut wie bei dem Ausführungsbeispiel gemäß Fig. 4.

Vorzugsweise ist mit den Steuerstufen 46' und 46" gemäß Fig. 4 bzw. Fig. 5 ein Verlauf des Stroms IZ' oder IZ" erreichbar, welcher das Segment 58 und den Abschnitt 60 aufweist, so daß in dem Bereich BK kleiner und dem Bereich BM und mittlerer Bedämpfungsabstände B, welche dem steil ansteigenden Bereich 50 und dem ansteigenden Bereich 52 des Widerstands RLC entsprechen, näherungsweise die Verhältnisse von ULC wie in Fig. 2 dargestellt erreichbar sind.

Im übrigen sind bei den Realisierungsbeispielen gemäß Fig. 4 und 5 die anderen Komponenten des Oszillators 10 gleich ausgebildet, wie bei dem Ausführungsbeispiel gemäß Fig. 1, so daß hierauf vollinhaltlich Bezug genommen wird.

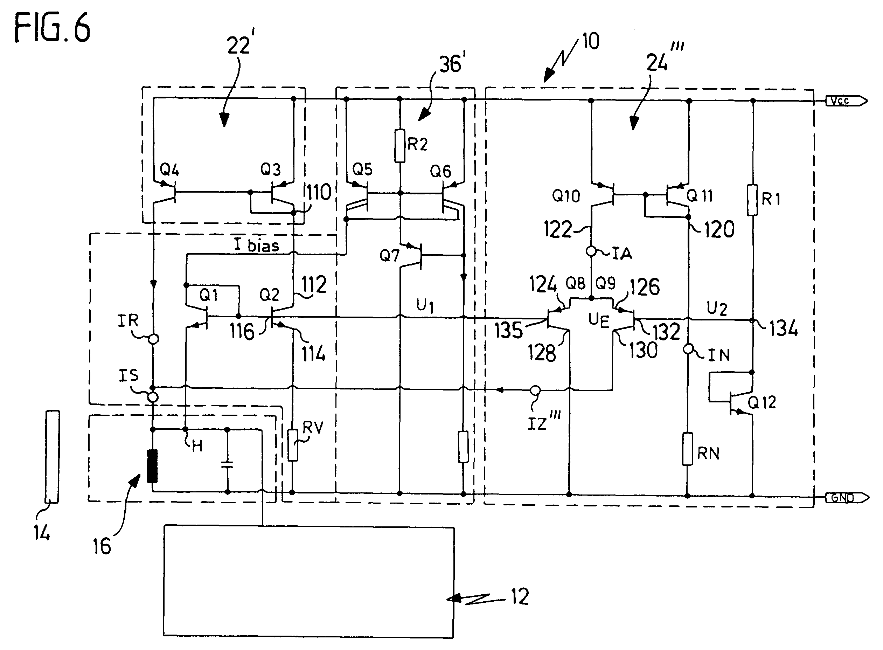

Ein weiteres vereinfachtes Ausführungsbeispiel eines erfindungsgemäßen Oszillators 10, dargestellt in Fig. 6, umfaßt den bereits bekannten Resonanzkreis 16, welcher durch den Schleifenstrom IS am Schwingen gehalten wird. Der Schleifenstrom IS setzt sich dabei aus dem Rückkopplungsstrom IR und dem Zusatzstrom IZ''' additiv zusammen.

Den Rückkopplungsstrom IR liefert die Mitkopplungsstufe 22', welche einen durch die Transistoren Q3 und Q4 gebildeten üblichen Stromspiegel umfaßt.

Derartige herkömmliche Stromspiegel sind beispielsweise in dem Buch von Paul R. Gray, Robert G. Meyer: Analysis and Design of Analog integrated circuits, John Wiley & Sons, Second Edition, 1984, beschrieben.

Ein Steuereingang 110 des aus den Transistoren Q3 und Q4 gebildeten Stromspiegels liegt dabei am Kollektor 112 eines Transistors Q2, dessen Emitter 114 über einen Widerstand RV mit Masse verbunden ist. Eine Basis 116 dieses Transistors Q2 ist dabei angesteuert über einen als Diode geschalteten Transistor Q1, welcher eine zwischen der Basis 116 und dem Anschluß H liegende Diode zur Festlegung des Arbeitsbereichs des Transistors Q2 bildet. Über diese durch den Transistor Q1 gebildete Diode fließt ein Strom Ibias, welcher von einer Konstantstromquelle 36' geliefert wird.

Die Konstantstromquelle 36', die ihrerseits durch die Transistoren Q5, Q6, Q7 und den Widerstand R2 gebildet wird, stellt eine aus dem oben genannten Buch von Paul R. Gray bekannte Schaltung dar.

Die Zusatzstromstufe 24'" umfaßt einen aus den Transistoren Q10 und Q11 gebildeten Stromspiegel, zwischen dessen Steuereingang 120 und Masse ein Widerstand RN liegt. Über diesen Widerstand RN läßt sich ein vom Steuereingang 120 des aus den Transistoren Q10 und Q11 gebildeten Stromspiegels zu Masse fließender Strom IN einstellen, welcher seinerseits einen über den Transistor Q10 fließenden Ausgangsstrom IA des aus den Transistoren Q10 und Q11 gebildeten Stromspiegels festlegt.

Mit einem Ausgang 122 des aus den Transistoren Q10 und Q11 gebildeten Stromspiegels sind Emitter 124 und 126 zweier Transistoren Q8 und Q9 verbunden, die gemeinsam einen Differenzverstärker bilden, wobei ein Kollektor 128 des Transistors Q8 auf Masse liegt, während ein Kollektor 130 des Transistors Q9 mit dem Anschluß H des Resonanzkreises 16 verbunden ist und diesem den Zusatzstrom IZ"' zuführt.

Zur Festlegung der Arbeitsweise des aus Q8 und Q9 gebildeten Differenzverstärkers ist eine Basis 132 des Transistors Q9 an einen Mittelabgriff 134 eines Spannungsteilers gelegt, wobei zwischen einer Speisespannung VCC und dem Mittelabgriff 134 ein Widerstand R1 liegt und zwischen dem Mittelabgriff 134 und Masse ein als Diode geschalteter Transistor Q12. Damit ist das Potential an der Basis 132 des Transistors Q9 festgelegt.

Im Gegensatz hierzu ist eine Basis 135 des Transistors Q8 mit der Basis 116 des Transistors Q2 verbunden und somit über den als Diode geschalteten Transistor Q1 mit dem Anschluß H des Resonanzkreises 16.

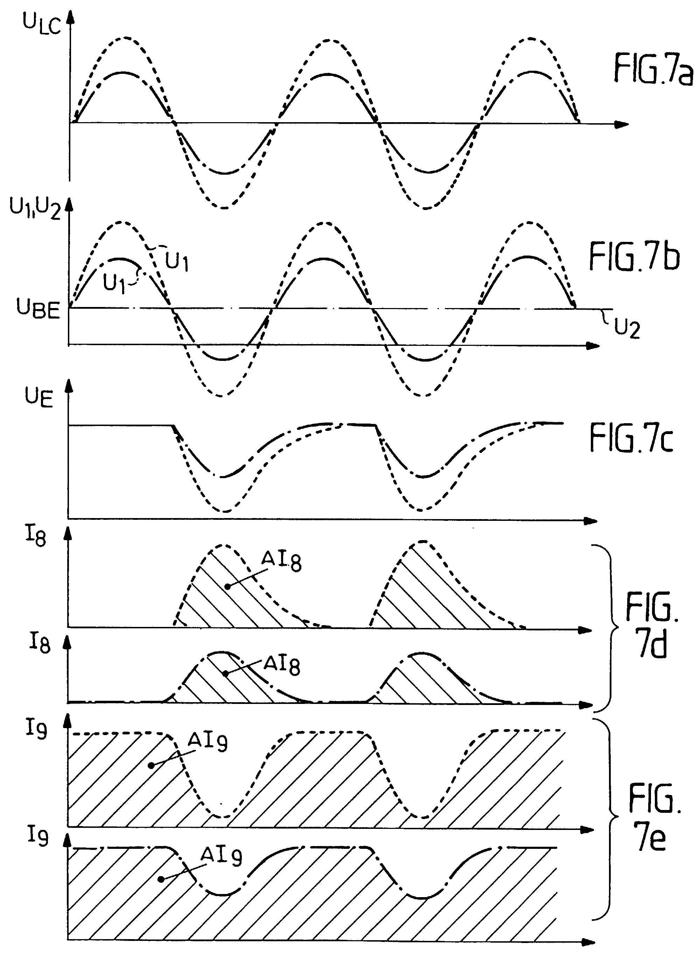

Die Zusatzstromquelle 24'" arbeitet nun in der in Fig. 7 dargestellten Art und Weise.

Fig. 7a zeigt den Spannungsverlauf der Spannung ULC in Form einer gepunkteten Kurve für den entdämpften Zustand des Resonanzkreises 16 und in Form einer strichpunktierten Kurve für den bedämpften Zustand des Resonanzkreises 16.

Eine derartige Spannung ULC führt aufgrund des als Diode geschalteten Transistors Q1 zu einer Spannung U1 an der Basis 135 des Transistors Q8, welche um eine Basis-Emitter-Spannung UBE des Transistors Q1 verschoben ist, so daß die Spannung U1 je nach Amplitude um die Verschiebung UBE oszilliert.

Diese Spannung U1 wird durch den Differenzverstärker, gebildet aus Q8 und Q9, mit einer Spannung U2 verglichen, welche an der Basis 132 des Transistors Q9 und somit auch am Mittelabgriff 134 des aus R1 und Q12 gebildeten Spannungsteilers anliegt.

Daraus ergibt sich eine Emitterspannung UE, welche, wie in Fig. 7c dargestellt, dann einen Maximalwert hat, wenn der Transistor Q8 sperrt und durch den Transistor Q9 der gesamte Strom fließt. Sobald der Transistor Q8 jedoch ebenfalls einen Strom fließen läßt, nimmt die Spannung UE ab, wobei die Abnahme proportional zur Amplitude der Spannung U1 ist, das heißt, die Abnahme ist geringer im bedämpften Zustand (strichpunktiert) des Resonanzkreises 16 als im entdämpften Zustand (gepunktet) des Resonanzkreises 16.

Die über den Transistor Q8 fließenden Ströme sind einmal für den Fall des bedämpften Resonanzkreises (strichpunktiert) und den Fall des entdämpften (gepunktet) Resonanzkreises 16 in Fig. 7d dargestellt.

In gleicher Weise sind in Fig. 7e die in den beiden Fällen über den Transistor Q9 fließenden Ströme dargestellt.

Die über den Transistor Q9 fließenden Ströme I9 bilden mit ihren AC-Anteilen den Strom IZ''', welcher den Schwingungszustand des Resonanzkreises 16 beeinflußt. Der AC-Anteil des Stromes I9 ergibt sich durch Fourierzerlegung des Stromverlaufs von I9, wobei lediglich die Amplitude der mit der Resonanzfrequenz des Resonanzkreises 16 übereinstimmenden Fourierkomponente einen Beitrag liefert. Die anderen Komponenten werden durch den als Filter wirkenden Resonanzkreis 16 ausgefiltert. Die Amplitude der der Resonanzfrequenz des Resonanzkreises 16 entsprechenden Fourierkomponente ist dabei ungefähr proportional zum Integral des Stromes I9 über der Zeit und somit zu der in Fig. 7e dargestellten schraffierten Fläche AI9. Aus Fig. 7e ergibt sich dabei, daß diese Fläche AI9 im Fall der Bedämpfung und somit kleiner Amplitude von U1 größer ist als im Fall der Entdämpfung, woraus wiederum folgt, daß IZ'" bei kleinen Bedämpfungsabständen größer ist als bei großen und somit ein Amplitudenwertverlauf von IZ'" entsteht, der dem in Fig. 3 dargestellten Verlauf von IZ ähnlich ist.

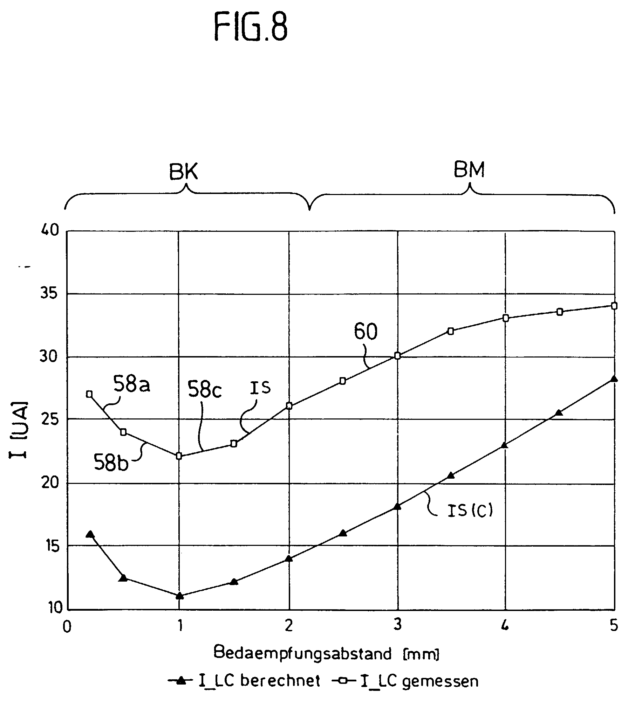

Der sich aus den Strömen IR und IZ'" ergebende Amplitudenwertverlauf des Schleifenstroms IS ist in Fig. 8 über dem Bedämpfungsabstand dargestellt und zeigt im Bereich BK beispielsweise drei ineinander übergehende Segmente 58a, b, c, deren Steigung kleiner als im Abschnitt 60 des Bereichs BM ist.

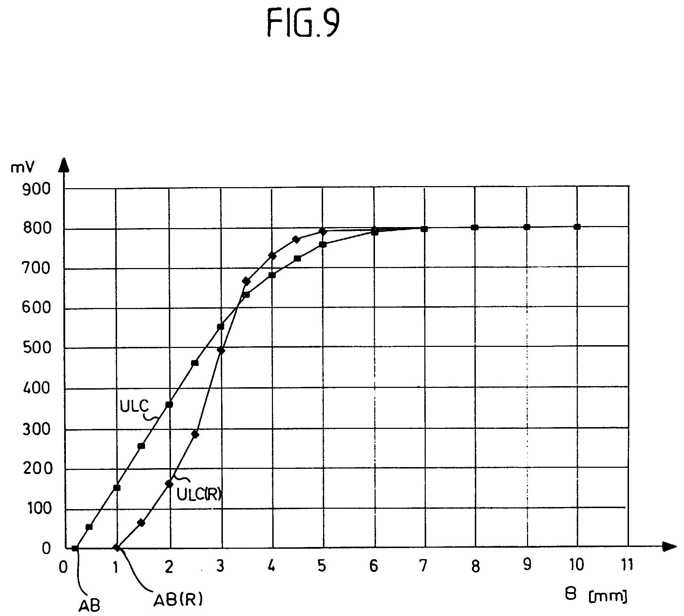

Dieser Schleifenstrom IS führt zu einem in Fig. 9 dargestellten Amplitudenwertverlauf der Spannung ULC. In Fig. 9 ist zu erkennen, daß ULC linear verläuft und zwar im wesentlichen von einem Wert nahe Null bis zu einem Bedämpfungsabstand im Bereich von ungefähr 4 bis 5mm, das heißt linear im wesentlichen in den Bereichen BK und BM. Ferner ist in Fig. 9 noch der Amplitudenwertverlauf von ULC (R), das heißt der Oszillatorspannung bei IZ=0 dargestellt. Daraus ergibt sich, daß durch den Zusatzstrom IZ'" eine deutliche Verbesserung der Linearität des Amplitudenwertverlaufs von ULC erreichbar ist und außerdem ein Verschieben des Abreißpunktes AB zu Werten nahe Null.

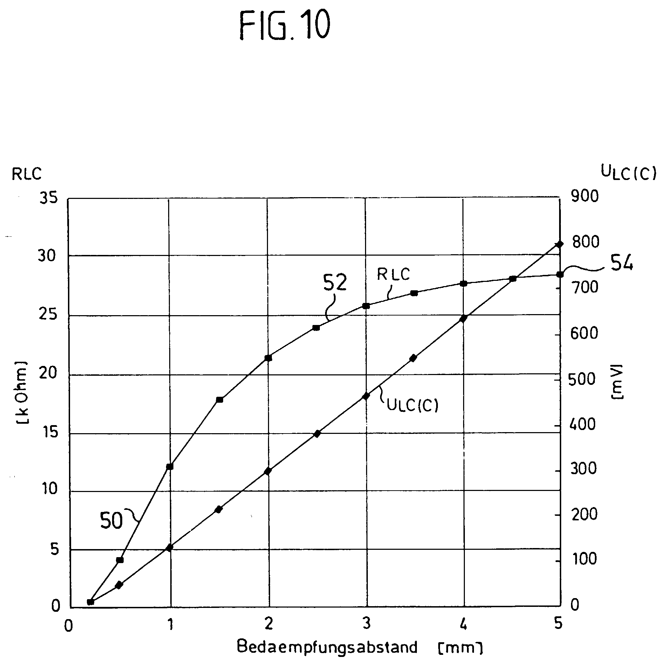

In Fig. 10 ist ferner noch zusätzlich der Verlauf des Gesamtwiderstandes RLC dargestellt, wobei dieser in gleicher Weise, wie bereits in Fig. 2 dargestellt, die Bereiche 50, 52 und nicht mehr ganz dargestellt den Bereich 54 aufweist.

Ferner ist in Fig. 10 noch ein idealer linearer Verlauf von ULC (C), das heißt ein theoretischer Verlauf der Amplitudenwerte der Oszillatorspannung dargestellt. Bei einem derartigen theoretischen Verlauf ist IS(C) zusätzlich noch in Fig. 8 dargestellt.

Der Vergleich der theoretischen Werte von ULC (C) und IS(C) mit ULC und IS zeigt im Bereich BK und BM kleiner und mittlerer Bedämpfungsabstände eine gute Übereinstimmung der auf der Basis von RLC berechneten theoretischen Werte mit den tatsächlich gemessenen Werten von IS.

## Patentansprüche

1. Sensor zur Erfassung eines elektrisch leitenden oder magnetisierbaren Objekts (14) mit einem Oszillator (10) umfassend
einen eine Induktivität (L) und eine Kapazität (C) aufweisenden Resonanzkreis (16), dessen Resonanzkreiswiderstand (R_{CL}) von einem Bedämpfungsabstand (B) zwischen der Induktivität (L) und dem Objekt (14) abhängt und im Bereich kleiner Bedämpfungsabstände (BK) steil ansteigt, im Bereich mittlerer Bedämpfungsabstände (BM) weniger steil weiter ansteigt und im Bereich großer Bedämpfungsabstände (BG) im wesentlichen einen konstanten Wert aufweist,
und eine einen Schleifenstrom (IS) für den Resonanzkreis (16) liefernde geschlossene adaptive Schleifenstufe (18), welche einen vom Bedämpfungsabstand (B) abhängigen Amplitudenwertverlauf erzeugt,
und mit einer eine am Resonanzkreis (16) anliegende Oszillatorspannung (U_{LC}) erfassenden Auswerteschaltung (12)
**dadurch gekennzeichnet,**
daß die adaptive Schleifenstufe so aufgebaut ist, daß sie einen mit dem Bedämpfungsabstand (B) variierenden Amplitudenwertverlauf des Schleifenstroms (IS) erzeugt, welcher im Bereich (BK) kleiner Bedämpfungsabstände (B) mindestens ein schwingungserhaltendes Segment (58) aufweist, dessen Steigung kleiner ist als die Steigung des Amplitudenwertverlaufs (IS) im Bereich (60, BM) mittlerer Bedämpfungsabstände (B).

2. Sensor nach Anspruch 1, dadurch gekennzeichnet, daß die adaptive Schleifenstufe (18) einen derartigen, sich mit dem Bedämpfungsabstand (B) ändernden Schleifenstrom (IS) erzeugt, daß der Amplitudenwertverlauf des Schleifenstroms (IS) im Bereich (BK) kleiner Bedämpfungsabstände (B) mehrere schwingungserhaltende Segmente (58) aufweist.

3. Sensor nach Anspruch 2, dadurch gekennzeichnet, daß die adaptive Schleifenstufe (18) einen derartigen, sich mit dem Bedämpfungsabstand (B) ändernden Schleifenstrom (IS) erzeugt, daß mit zunehmendem Bedämpfungsabstand (B) schwingungserhaltende Segmente (58) mit zunehmend größerer Steigung aufeinanderfolgen.

4. Sensor nach einem der voranstehenden Ansprüche, dadurch gekennzeichnet, daß die adaptive Schleifenstufe (18) einen derartigen, sich mit dem Bedämpfungsabstand (B) ändernden Schleifenstrom (IS) erzeugt, daß der Amplitudenwertverlauf des Schleifenstroms (IS) stetig ist.

5. Sensor nach einem der voranstehenden Ansprüche, dadurch gekennzeichnet, daß die adaptive Schleifenstufe (18) einen derartigen, sich mit dem Bedämpfungsabstand (B) ändernden Schleifenstrom (IS) erzeugt, daß die Steigung des Amplitudenwertverlaufs des Schleifenstroms (IS) im Bereich (BK) kleiner Bedämpfungsabstände (B) stetig verläuft.

6. Sensor nach Anspruch 5, dadurch gekennzeichnet, daß die adaptive Schleifenstufe (18) einen derartigen, sich mit dem Bedämpfungsabstand (B) ändernden Schleifenstrom (IS) erzeugt, daß die Steigung des Amplitudenwertverlaufs des Schleifenstroms (IS) stetig verläuft.

7. Sensor nach einem der voranstehenden Ansprüche, dadurch gekennzeichnet, daß die adaptive Schleifenstufe (18) einen derartigen, sich mit dem Bedämpfungsabstand (B) ändernden Schleifenstrom (IS) erzeugt, daß der Amplitudenwertverlauf des Schleifenstroms (IS) im Bereich (BM) mittlerer Bedämpfungsabstände (B) im wesentlichen linear ansteigt.

8. Sensor nach einem der voranstehenden Ansprüche, dadurch gekennzeichnet, daß die adaptive Schleifenstufe (18) einen derartigen, sich mit dem Bedämpfungsabstand (B) ändernden Schleifenstrom (IS) erzeugt, daß der Amplitudenwertverlauf des Schleifenstroms (IS) im Bereich (BK) kleiner Bedämpfungsabstände beim Übergang von diesem zum Bereich (BM) mittlerer Bedämpfungsabstände (B) die größte Steigung aufweist.

9. Sensor nach einem der voranstehenden Ansprüche, dadurch gekennzeichnet, daß die adaptive Schleifenstufe (18) einen derartigen, sich mit dem Bedämpfungsabstand (B) ändernden Schleifenstrom (IS) erzeugt, daß der Amplitudenwertverlauf des Schleifenstroms (IS) im Bereich (BK) kleiner Bedämpfungsabstände (B) nahe des Bedämpfungsabstandes 0 das Segment (58) mit der kleinsten Steigung aufweist.

10. Sensor nach einem der voranstehenden Ansprüche, dadurch gekennzeichnet, daß die adaptive Schleifenstufe (18) einen derartigen, sich mit dem Bedämpfungsabstand (B) ändernden Schleifenstrom (IS) erzeugt, daß ein schwingungserhaltendes Segment (58) eine Steigung von ≤ 0 aufweist.

11. Sensor nach einem der voranstehenden Ansprüche, dadurch gekennzeichnet, daß die adaptive Schleifenstufe (18) einen derartigen, sich mit dem Bedämpfungsabstand (B) ändernden Schleifenstrom (IS) erzeugt, daß der Amplitudenwertverlauf des Schleifenstroms (IS) im Bereich des schwingungserhaltenden Segments (58) Werte aufweist, welche ein Abreißen des Oszillators verhindern.

12. Sensor nach einem der voranstehenden Ansprüche, dadurch gekennzeichnet, daß die adaptive Schleifenstufe (18) einen derartigen, sich mit dem Bedämpfungsabstand (B) ändernden Schleifenstrom (IS) erzeugt, daß der Amplitudenwertverlauf des Schleifenstroms (IS) im Bereich (BK) kleiner Bedämpfungsabstände (B) Werte aufweist, welche ein Abreißen des Oszillators bis zu Bedämpfungsabständen (B) von nahe 0 verhindern.

13. Sensor nach einem der voranstehenden Ansprüche, dadurch gekennzeichnet, daß die adaptive Schleifenstufe (18) einen derartigen, sich mit dem Bedämpfungsabstand (B) ändernden Schleifenstrom (IS) erzeugt, daß der Amplitudenwertverlauf des Schleifenstroms (IS) zu einem im wesentlichen stetig steigenden Amplitudenwertverlauf der Oszillatorspannung (ULC) im Bereich (BK) kleiner und mittlerer Bedämpfungsabstände (BM) führt.

14. Sensor nach Anspruch 13, dadurch gekennzeichnet, daß die adaptive Schleifenstufe (18) einen derartigen, sich mit dem Bedämpfungsabstand (B) ändernden Schleifenstrom (IS) erzeugt, daß der Amplitudenwertverlauf des Schleifenstroms (IS) zu einem im wesentlichen linear ansteigenden Amplitudenwertverlauf der Oszillatorspannung (ULC) im Bereich (BK) kleiner und mittlerer Bedämpfungsabstände (BM) führt.

15. Sensor nach einem der voranstehenden Ansprüche, dadurch gekennzeichnet, daß der Resonanzkreiswiderstand sich entsprechend der Formel R=Rᵣₑₛ₀ (1 - e ^{-B}/K) verhält, wobei Rᵣₑₛ₀ der Resonanzkreiswiderstand ohne Bedämpfung, B der Abstand zwischen Objekt und Induktivität und K eine Funktionskonstante sind, daß der Bereich kleiner Bedämpfungsabstände bei Werten von B kleiner ungefähr 2K liegt und daß die adaptive Schleifenstufe (18) in diesem Bereich den, sich mit dem Bedämpfungsabstand (B) ändernden Schleifenstrom (IS) mit dem schwingungserhaltenden Segment (58) erzeugt,.

16. Sensor nach einem der voranstehenden Ansprüche, dadurch gekennzeichnet, daß Resonanzkreiswiderstand sich entsprechend der Formel R=Rᵣₑₛ₀(1 - e ^{-B}/K) verhält, wobei Rᵣₑₛ₀ der Resonanzkreiswiderstand ohne Bedämpfung, B der Abstand zwischen Objekt und Induktivität und K eine Funktionskonstante sind, daß der Bereich mittlerer Bedämpfungsabstände bei Werten von B zwischen ungefähr 2K und ungefähr 4K liegt.

17. Sensor nach einem der voranstehenden Ansprüche, dadurch gekennzeichnet, daß der Resonanzkreiswiderstand sich entsprechend der Formel R=Rᵣₑₛ₀(1 - e ^{-B}/K) verhält, wobei Rᵣₑₛ₀ der Resonanzkreiswiderstand ohne Bedämpfung, B der Abstand zwischen Objekt und Induktivität und K eine Funktionskonstante sind, und daß die adaptive Schleifenstufe (18) einen derartigen, sich mit dem Bedämpfungsabstand (B) ändernden Schleifenstrom (IS) erzeugt, daß das schwingungserhaltende Segment bei Werten von B≤ ungefähr 1,5K liegt.

18. Sensor nach einem der voranstehenden Ansprüche, dadurch gekennzeichnet, daß die Schleifenstufe (18) eine einen Rückkopplungsstrom (IR) liefernde Rückkopplungsstufe (20, 22) und eine einen mitgekoppelten Zusatzstrom (IZ) liefernde Zusatzstromstufe (24) umfaßt.

19. Sensor nach Anspruch 18, dadurch gekennzeichnet, daß die Zusatzstromstufe (24) bei dem schwingungserhaltenden Segment (58) entsprechenden Resonanzkreiswiderstandswerten (RLC) einen höheren Zusatzstrom (IZ) zum Rückkopplungsstrom (IR) liefert als außerhalb des Bereichs (BK) kleiner Bedämpfungsabstände (B).

20. Sensor nach einem der voranstehenden Ansprüche, dadurch gekennzeichnet, daß der Resonanzkreiswiderstand sich entsprechend der Formel R = Rᵣₑₛ₀ (1 - e ^{-B}/K) verhält, wobei Rᵣₑₛ₀ der Resonanzkreiswiderstand im unbedämpften Zustand, B der Abstand zwischen Objekt und Induktivität und K eine Funktionskonstante sind, und daß die Zusatzstromstufe (24) bei Werten des Resonanzkreiswiderstandes, welche einem Abstand B von weniger als 1,5K entsprechen, einen höheren Zusatzstrom (IZ) in den Resonanzkreis (16) einspeist als bei einem Abstand B größer als 2K.

21. Sensor nach Anspruch 20, dadurch gekennzeichnet, daß die Zusatzstromstufe (24) bei Werten des Resonanzkreiswiderstandes (RLC), die einem Abstand B von weniger als 3K entsprechen, einen den Schleifenstrom (IS) gegenüber dem Rückkopplungsstrom (IR) nennenswert erhöhenden Zusatzstrom (IZ) einspeist.

22. Sensor nach einem der Ansprüche 18 bis 21, dadurch gekennzeichnet, daß die Zusatzstromstufe (24) bei Bedämpfungsabständen (B) unterhalb eines kritischen Bedämpfungsabstandes (AB) einen höheren Zusatzstrom (IZ) liefert als oberhalb desselben.

23. Sensor nach einem der Ansprüche 18 bis 22, dadurch gekennzeichnet, daß der Zusatzstrom (IZ) einen mit zunehmendem Bedämpfungsabstand (B) abfallenden Verlauf aufweist.

24. Sensor nach Anspruch 23, dadurch gekennzeichnet, daß der Zusatzstrom (IZ) einen ähnlich 1/B abfallenden Verlauf aufweist.

25. Sensor nach einem der Ansprüche 18 bis 24, dadurch gekennzeichnet, daß die Zusatzstromstufe (24) eine Konstantstromquelle (44; Q10, Q11) und eine spannungsadaptive Stromsteuerung (46; Q8, Q9) umfaßt.

26. Sensor nach Anspruch 25, dadurch gekennzeichnet, daß die spannungsadaptive Stromsteuerung einen Differenzverstärker (Q8, Q9) aufweist.

27. Sensor nach Anspruch 25 oder 26, dadurch gekennzeichnet, daß die spannungsadaptive Stromsteuerung (46, Q8, Q9) eine der Steuerspannung für die Rückkopplungsstufe (20, 22) entsprechende Steuerspannung (ULC) erfaßt.

28. Sensor nach einem der Ansprüche 18 bis 27, dadurch gekennzeichnet, daß die Rückkopplungsstufe eine Mitkopplungsstufe (22) und einen Verstärker (20) zur Ansteuerung derselben umfaßt.

29. Sensor nach Anspruch 28, dadurch gekennzeichnet, daß die Mitkopplungsstufe (22) als Stromspiegel (Q3, Q4) aufgebaut ist.

## Claims

1. Sensor for detecting an electrically conductive or magnetizable object (14) with an oscillator (10) comprising
a resonant circuit (16) comprising an inductor (L) and a capacitor (C), the resonant circuit impedance (RC_{L}) depending on a damping distance (B) between the inductor (L) and the object (14) and rising steeply in the range of small damping distances (BK), further rising less steeply in the range of medium damping distances (BM) and essentially having a constant value in the range of large damping distances (BG),
and a closed adaptive loop stage (18) supplying a loop current (IS) for the resonant circuit (16), said loop stage generating a course of an amplitude value dependent on the damping distance (B),
and an evaluation circuit (12) detecting an oscillator voltage (U_{LC}) applied to the resonant circuit (16),
**characterized in that**
said adaptive loop stage is built up such that it generates a course of the amplitude value of the loop current (IS) varying with the damping distance (B) and having in the range (BK) of small damping distances (B) at least one oscillation-maintaining segment (58) whose gradient is smaller than the gradient of the course of the amplitude value (IS) in the range (60, BM) of medium damping distances (B).

2. Sensor as defined in claim 1, characterized in that said adaptive loop stage (18) generates such a loop current (IS) varying with the damping distance (B) that the course of the amplitude value of the loop current (IS) has a plurality of oscillation-maintaining segments (58) in the range (BK) of small damping distances (B).

3. Sensor as defined in claim 2, characterized in that said adaptive loop stage (18) generates such a loop current (IS) varying with the damping distance (B) that with increasing damping distance (B), oscillation-maintaining segments (58) with an increasingly large gradient follow one another.

4. Sensor as defined in any one of the preceding claims, characterized in that said adaptive loop stage (18) generates such a loop current (IS) varying with the damping distance (B) that the course of the amplitude value of the loop current (IS) is continuous.

5. Sensor as defined in any one of the preceding claims, characterized in that said adaptive loop stage (18) generates such a loop current (IS) varying with the damping distance (B) that the gradient of the course of the amplitude value of the loop current (IS) is continuous in the range (BK) of small damping distances (B).

6. Sensor as defined in claim 5, characterized in that said adaptive loop stage (18) generates such a loop current (IS) varying with the damping distance (B) that the gradient of the course of the amplitude value of the loop current (IS) is continuous.

7. Sensor as defined in any one of the preceding claims, characterized in that said adaptive loop stage (18) generates such a loop current (IS) varying with the damping distance (B) that the course of the amplitude value of the loop current (IS) rises essentially linearly in the range (BM) of medium damping distances (B).

8. Sensor as defined in any one of the preceding claims, characterized in that said adaptive loop stage (18) generates such a loop current (IS) varying with the damping distance (B) that the course of the amplitude value of the loop current (IS) has the largest gradient in the range (BK) of small damping distances at the transition from this range to the range (BM) of medium damping distances (B).

9. Sensor as defined in any one of the preceding claims, characterized in that said adaptive loop stage (18) generates such a loop current (IS) varying with the damping distance (B) that the course of the amplitude value of the loop current (IS) has the segment (58) with the smallest gradient in the range (BK) of small damping distances (B) near to the damping distance 0.

10. Sensor as defined in any one of the preceding claims, characterized in that said adaptive loop stage (18) generates such a loop current (IS) varying with the damping distance (B) that one oscillation-maintaining segment (58) has a gradient of ≤ 0.

11. Sensor as defined in any one of the preceding claims, characterized in that said adaptive loop stage (18) generates such a loop current (IS) varying with the damping distance (B) that the course of the amplitude value of the loop current (IS) has in the range of the oscillation-maintaining segment (58) values preventing breakdown of the oscillator.

12. Sensor as defined in any one of the preceding claims, characterized in that said adaptive loop stage (18) generates such a loop current (IS) varying with the damping distance (B) that the course of the amplitude value of the loop current (IS) has in the range (BK) of small damping distances (B) values preventing breakdown of the oscillator as far as damping distances (B) of near to 0.

13. Sensor as defined in any one of the preceding claims, characterized in that said adaptive loop stage (18) generates such a loop current (IS) varying with the damping distance (B) that the course of the amplitude value of the loop current (IS) leads to a course of the amplitude value of the oscillator voltage (ULC) rising essentially continuously in the range (BK) of small and the range (BM) of medium damping distances.

14. Sensor as defined in claim 13, characterized in that said adaptive loop stage (18) generates such a loop current (IS) varying with the damping distance (B) that the course of the amplitude value of the loop current (IS) leads to a course of the amplitude value of the oscillator voltage (ULC) rising essentially linearly in the range (BK) of small and the range (BM) of medium damping distances.

15. Sensor as defined in any one of the preceding claims, characterized in that the resonant circuit impedance behaves according to the formula R=Rᵣₑₛ₀ (1 - e ^{-B}/K), where Rᵣₑₛ₀ is the resonant circuit impedance without damping, B the distance between object and inductor and K a functional constant, in that the range of small damping distances is at values of B smaller than approximately 2K, and in that said adaptive loop stage (18) generates in this range the loop current (IS) varying with the damping distance (B) with the oscillation-maintaining segment (58).

16. Sensor as defined in any one of the preceding claims, characterized in that the resonant circuit impedance behaves according to the formula R=Rᵣₑₛ₀ (1 - e ^{-B}/K), where Rᵣₑₛ₀ is the resonant circuit impedance without damping, B the distance between object and inductor and K a functional constant, and in that the range of medium damping distances is at values of B between approximately 2K and approximately 4K.

17. Sensor as defined in any one of the preceding claims, characterized in that the resonant circuit impedance behaves according to the formula R=Rᵣₑₛ₀ (1 - e ^{-B}/K), where Rᵣₑₛ₀ is the resonant circuit impedance without damping, B the distance between object and inductor and K a functional constant, and in that said adaptive loop stage (18) generates such a loop current (IS) varying with the damping distance (B) that the oscillation-maintaining segment is at values of B ≤ approximately 1.5K.

18. Sensor as defined in any one of the preceding claims, characterized in that the loop stage (18) comprises a feedback stage (20, 22) supplying feedback current (IR) and an additional current stage (24) supplying an additional current (IZ) as further positive feedback current.

19. Sensor as defined in claim 18, characterized in that at resonant circuit impedance values (RLC) corresponding to the oscillation-maintaining segment (58) the additional current stage (24) supplies a greater additional current (IZ) to the feedback current (IR) than outside the range (BK) of small damping distances (B).

20. Sensor as defined in any one of the preceding claims, characterized in that the resonant circuit impedance behaves according to the formula R=Rᵣₑₛ₀ (1 - e ^{-B}/K), where Rᵣₑₛ₀ is the resonant circuit impedance in the undamped state, B the distance between object and inductor and K a functional constant, and in that at values of the resonant circuit impedance corresponding to a distance B of less than 1.5K the additional current stage (24) feeds a greater additional current (IZ) into the resonant circuit (16) than at a distance B of more than 2K.

21. Sensor as defined in claim 20, characterized in that at values of the resonant circuit impedance (RLC) corresponding to a distance B of less than 3K the additional current stage (24) feeds in an additional current (IZ) appreciably increasing the loop current (IS) in comparison with the feedback current (IR).

22. Sensor as defined in any one of claims 18 to 21, characterized in that the additional current stage (24) supplies a greater additional current (IZ) at damping distances (B) below a critical damping distance (AB) than above it.

23. Sensor as defined in any one of claims 18 to 22, characterized in that the course of the additional current (IZ) falls with increasing damping distance (B).

24. Sensor as defined in claim 23, characterized in that the course of the additional current (IZ) falls similar to 1/B.

25. Sensor as defined in any one of claims 18 to 24, characterized in that the additional current stage (24) comprises a constant current source (44; Q10, Q11) and a voltage-adapting current control (46; Q8, Q9).

26. Sensor as defined in claim 25, characterized in that the voltage-adapting current control comprises a difference amplifier (Q8, Q9).

27. Sensor as defined in claim 25 or 26, characterized in that the voltage-adapting current control (46, Q8, Q9) detects a control voltage (ULC) corresponding to the control voltage for the feedback stage (20, 22).

28. Sensor as defined in any one of claims 18 to 27, characterized in that the feedback stage comprises a positive feedback stage (22) and an amplifier (20) for controlling the same.

29. Sensor as defined in claim 28, characterized in that the positive feedback stage (22) is designed as a current mirror (Q3, Q4).

## Revendications

1. Capteur de détection d'un objet électriquement conducteur ou magnétisable (14) qui inclut un oscillateur (10), comprenant :
un circuit résonnant (16) comprenant une inductance (L) et une capacité (C) dont la résistance (RCL) de circuit de résonance dépend de la distance (B) d'atténuation entre l'inductance (L) et l'objet (14) et croît selon une pente raide dans le domaine des petites distances d'atténuation (BK), croit selon une pente moins raide dans le domaine des distances moyennes d'atténuation (BM) et présente une valeur essentiellement constante dans le domaine des grandes distances d'atténuations (BG),
et un étage de boucle adaptatif qui fournit un courant (IS) de boucle pour le circuit de résonnance (16) et qui engendre un tracé de valeurs d'amplitudes qui dépend de la distance (B) d'atténuation,
et qui inclut aussi un circuit d'évaluation (12) qui détecte une tension d'oscillateur (ULC) appliquée au circuit de résonnance (16),
caractérisé en ce que
l'étage de boucle adaptatif est réalisé d'une manière telle qu'il engendre un tracé de valeurs d'amplitude du courant (IS) de boucle qui varie en fonction de la distance (B) d'atténuation et qui comporte, dans le domaine (BK) des petites distances d'atténuation (B), au moins un segnent (58) à oscillations maintenues dont la pente est plus faible que la pente du tracé (IS) des valeurs d'amplitude dans le domaine (60, BM) des distances d'atténuation (B) moyennes.

2. Capteur selon la revendication 1, caractérisé en ce que l'étage de boucle adaptatif (18) engendre un courant (IS) de boucle variable en fonction de la distance (B) d'atténuation tel que le tracé des valeurs d'amplitude du courant (IS) de boucle comporte plusieurs segments (58) à oscillations maintenues dans le domaine (BK) des petites distances d'atténuation (B).

3. Capteur selon la revendication 2, caractérisé en ce que l'étage de boucle adaptatif (18) engendre un courant de boucle variable en fonction de la distance (B) d'atténuation tel que des segments (58) à oscillations maintenues dont la pente augnente de façon croissante lorsque la distance (B) d'atténuation croît se suivent.

4. Capteur selon l'une des revendications précédentes, caractérisé en ce que l'étage de boucle adaptatif (18) engendre un courant de boucle variable en fonction de la distance (B) d'atténuation tel que le tracé des valeurs d'amplitude du courant (IS) de boucle est continu.

5. Capteur selon l'une des revendications précédentes, caractérisé en ce que l'étage de boucle adaptatif (18) engendre un courant de boucle variable en fonction de la distance (B) d'atténuation tel que la pente du tracé des valeurs d'amplitude du courant (IS) de boucle est continue dans le domaine (BK) des petites distances d'atténuation (B).

6. Capteur selon la revendication 5, caractérisé en ce que l'étage de boucle adaptatif (18) engendre un courant de boucle variable en fonction de la distance (B) d'atténuation tel que la pente du tracé des valeurs d'amplitude du courant (IS) de boucle est continue.

7. Capteur selon l'une des revendications précédentes, caractérisé en ce que l'étage de boucle adaptatif (18) engendre un courant de boucle variable en fonction de la distance (B) d'atténuation tel que le tracé des valeurs d'amplitude du courant (IS) de boucle croit de façon essentiellement linéaire dans le domaine (BM) des distances d'atténuation (B) moyennes.

8. Capteur selon l'une des revendications précédentes, caractérisé en ce que l'étage de boucle adaptatif (18) engendre un courant de boucle variable en fonction de la distance (B) d'atténuation tel que le tracé des valeurs d'amplitude du courant (IS) de boucle présente dans le domaine (BK) des petites distances d'atténuation la plus forte pente lors du passage de ce domaine au domaine (BM) des distances d'atténuation (B) moyennes.

9. Capteur selon l'une des revendications précédentes, caractérisé en ce que l'étage de boucle adaptatif (18) engendre un courant de boucle variable en fonction de la distance (B) d'atténuation tel que le tracé des valeurs d'amplitude du courant (IS) de boucle présente dans le domaine (BK) des petites distances d'atténuation le segment (58) à pente la plus faible près de la distance d'atténuation 0.

10. Capteur selon l'une des revendications précédentes, caractérisé en ce que l'étage de boucle adaptatif (18) engendre un courant de boucle variable en fonction de la distance (B) d'atténuation tel qu'un segment (58) à oscillations maintenues présente une pente ≤ 0.

11. Capteur selon l'une des revendications précédentes, caractérisé en ce que l'étage de boucle adaptatif (18) engendre un courant de boucle variable en fonction de la distance (B) d'atténuation tel que le tracé des valeurs d'amplitude du courant (IS) de boucle présente, dans le domaine du segment (58) à oscillations maintenues (58), des valeurs qui empêchent un décrochage de l'oscillateur.

12. Capteur selon l'une des revendications précédentes, caractérisé en ce que l'étage de boucle adaptatif (18) engendre un courant de boucle variable en fonction de la distance (B) d'atténuation tel que le tracé des valeurs d'amplitude du courant (IS) de boucle présente, dans le domaine (BK) des petites distances d'atténuation (B), des valeurs qui empêchent un décrochage de l'oscillateur jusqu'à des distances d'atténuation (B) proches de 0.

13. Capteur selon l'une des revendications précédentes, caractérisé en ce que l'étage de boucle adaptatif (18) engendre un courant de boucle variable en fonction de la distance (B) d'atténuation tel que le tracé des valeurs d'amplitude du courant (IS) de boucle conduit à un tracé de valeurs d'amplitude de la tension d'oscillateur (ULC) qui croît de façon essentiellement continue dans le domaine des distances d'atténuation petites (BK) et moyennes (BM).

14. Capteur selon la revendication 13, caractérisé en ce que l'étage de boucle adaptatif (18) engendre un courant de boucle variable en fonction de la distance (B) d'atténuation tel que le tracé des valeurs d'amplitude du courant (IS) de boucle (IS) conduit à un tracé de valeurs d'amplitude de la tension d'oscillateur (ULC) qui croît de façon essentiellement linéaire dans le domaine des distances d'atténuation petites (BK) et moyennes (BM).

15. Capteur selon l'une des revendications précédentes, caractérisé en ce que la résistance du circuit de résonnance se comporte conformément à la formule R = Rᵣₑₛ₀ (1 - e ^{-B}/K), où Rᵣₑₛ₀ est la résistance du circuit de résonnance en l'absence d'atténuation, B est la distance entre l'objet et l'inductance, et K est une fonction constante, en ce que le domaine des petites distances d'atténuation est situé à des valeurs de B inférieures à environ 2K et en ce que l'étage de boucle adaptatif (18) engendre dans ce domaine le courant (IS) de boucle, variable selon la distance (B) d'atténuation, qui comporte le segment (58) a oscillations maintenues.

16. Capteur selon l'une des revendications précédentes, caractérisé en ce que la résistance du circuit de résonnance se comporte conformément à la formule R = Rᵣₑₛ₀ (1 - e ^{-B}/K), où Rᵣₑₛ₀ est la résistance du circuit de résonnance en l'absence d'atténuation, B est la distance entre l'objet et l'inductance, et K est une fonction constante, en ce que le domaine des distances d'atténuation moyennes est situé à des valeurs de B comprises entre environ 2K et environ 4K.

17. Capteur selon l'une des revendications précédentes, caractérisé en ce que la résistance du circuit de résonnance se comporte conformément à la formule R = Rᵣₑₛ₀ (1 - e ^{-B}/K), où Rᵣₑₛ₀ est la résistance du circuit de résonnance en l'absence d'atténuation, B est la distance entre l'objet et l'inductance, et K est une fonction constante, en ce que l'étage de boucle adaptatif (18) engendre un courant (IS), variable en fonction de la distance (B) d'atténuation, tel que le segnent à oscillations maintenues est situé à des valeurs de (B) ≤ 1,5 K environ.

18. Capteur selon l'une des revendications précédentes, caractérisé en ce que l'étage de boucle (18) comprend un étage de rétroaction (22) qui produit un courant de rétroaction (IR) et un étage (24) de courant additionnel qui produit un courant additionnel (IZ) à rétraction positive.

19. Capteur selon la revendication 18, caractérisé en ce que l'étage (24) de courant additionnel fournit en plus du courant de rétroaction (IR) un courant additionnel (IZ) plus élevé pour des valeurs de résistance (RLC) du circuit de résonnance qui correspondent au segnent (58) à oscillations maintenues qu'en dehors du domaine (BK) des petites distances d'atténuation ( B).

20. Capteur selon l'une des revendications précédentes, caractérisé en ce que la résistance du circuit de résonnance se comporte conformément à la formule R = Rᵣₑₛ₀ (1 - e ^{-B}/K), où Rᵣₑₛ₀ est la résistance du circuit de résonnance en l'absence d'atténuation, B est la distance entre l'objet et l'inductance, et K est une fonction constante, et en ce que l'étage (24) de courant additionnel envoie dans le circuit de résonnance (16) un courant additionnel (IZ) plus élevé pour des valeurs de la résistance du circuit de résonnance qui correspondent à une distance B inférieure à 1,5K que pour une distance B supérieure à 2K.

21. Capteur selon la revendication 20, caractérisé en ce que l'étage (24) de courant additionnel envoie, pour des valeurs de la résistance (RLC) du circuit de résonnance qui correspondent à une distance B inférieure à 3K, un courant additionnel (IZ) qui augnente notablement le courant (IS) de boucle par rapport au courant de rétroaction (IR).

22. Capteur selon l'une des revendications 18 à 21, caractérisé en ce que l'étage (24) de courant additionnel envoie un courant additionnel (IZ) plus élevé pour des distances d'atténuation (B) inférieures à une distance d'atténuation critique que pour des distances supérieures à celle-ci.

23. Capteur selon l'une des revendications 18 à 22, caractérisé en ce que le courant additionnel (IZ) présente un tracé décroissant lorsque les distances (B) d'atténuation croissent.

24. Capteur selon la revendication 23, caractérisé en ce que le courant additionnel (IZ) présente un tracé décroissant semblable à 1/B).

25. Capteur selon l'une des revendications 18 à 24, caractérisé en ce que l'étage (24) de courant additionnel comprend une source (44; Q10, Q11) à courant constant et un réglage (46; Q8, Q9) de courant, adaptatif en fonction de la tension.

26. Capteur selon la revendication 25, caractérisé en ce que le réglage de courant, adaptatif en fonction de la tension, comprend un amplificateur différentiel (Q8, Q9).

27. Capteur selon la revendication 25 ou 26, caractérisé en ce que le réglage (46; Q9, Q9) de courant, adaptatif en fonction de la tension, détecte une tension de réglage (ULC) qui correspond à la tension de réglage pour l'étage (20, 22) de rétroaction.

28. Capteur selon l'une des revendications 18 à 27, caractérisé en ce que l'étage de rétroaction comprend un étage (22) à rétroaction positive et un amplificateur (20) pour exciter ce dernier.

29. Capteur selon la revendication 28, caractérisé en ce que l'étage (22) à rétroaction positive est réalisé sous forme de miroir de courant (Q3, Q4).
